# EUROPÄISCHE PATENTSCHRIFT

(11) **EP 1 547 900 B1**
(45) Veröffentlichungstag und Bekanntmachung des Hinweises auf die Patenterteilung: **21.01.2009**
(21) Anmeldenummer: 04003860.6
(22) Anmeldetag: 20.02.2004
(51) Int. Cl.: B62B 5/00, B60B 33/04

(54) **Anbaubare Radeinrichtung**
Mountable wheel arrangement
Agencement attachable pour roue

(30) Priorität: 22.12.2003 DE 10361126
(43) Veröffentlichungstag der Anmeldung: 29.06.2005
(73) Patentinhaber: Haacon Hebetechnik GmbH, D-97896 Freudenberg (DE)
(72) Erfinder: Birkholz, Holger, 97906 Faulbach (DE); Lazarus, Konrad, 97896 Freudenberg (DE)
(74) Vertreter: Tappe, Hartmut

(56) Entgegenhaltungen:
- DE-A1- 2 833 330
- DE-U1- 9 401 794
- DE-U1- 20 219 351
- US-A- 2 647 277
- US-A- 3 286 298

## Beschreibung

Die vorliegende Erfindung betrifft eine anbaubare Radeinrichtung zum Anschluss an einen Transportkörper, insbesondere für eine Container-Hub- und Transporteinrichtung, gemäß dem Oberbegriff des Anspruchs 1.

Anbaubare Radeinrichtungen zum Anschluss an einen Transportkörper, wie beispielsweise einen Container oder dergleichen, werden regelmäßig für einen kurzzeitigen Transporteinsatz verwendet, wenn es beispielsweise darum geht, einen Container oder dergleichen zu verladen oder über eine lediglich kurze Distanz in seiner Position zu verändern. Für den Transport über längere Strecken werden Container auf eine Ladeplattform eines Fahrzeuges, wie beispielsweise eines Lastkraftwagens oder eines Güterzugs verlastet. Aus diesem lediglich also eher vorübergehenden Einsatz derartiger Radeinrichtungen ergeben sich ganz spezifische Anforderungen, die zum einen die Schwerlastfähigkeit während des Transporteinsatzes und zum anderen die Eignung derartiger Radeinrichrungen betreffen, in der Zeit, in der sie nicht benötigt werden, möglichst raumsparend in einer Verlastepositon am Container zu verbleiben. Darüber hinaus müssen derartige Radeinrichtungen auch für den Einsatz unter erschwerten Verladebedingungen, in denen beispielsweise Rampen oder Fahrwegunebenheiten überwunden werden müssen, geeignet sein.

Aus der DE 28 33 330 A1 ist eine anbaubare Radeinrichtung zum Anschluss an einen Transportkörper mit einem gabelförmig ausgebildeten Achsschemel zur Aufnahme einer Radachse eines in den Achsschemel eingesetzten Laufrades und mit einer Tragkonsole bekannt, die zur Aufnahme eines Kupplungselements der Radeinrichtung zum Anschluss an einen Transportkörper und zur Verbindung mit dem Achsschemel dient. Darüber hinaus ist aus der D1 eine zwischen der Tragkonsole und dem Achsschemel wirksame Dämpfungseinrichtung bekannt.

Bei der bekannten Radeinrichtung ist eine Verbindung zwischen der Tragkonsole und dem Achsschemel dadurch realisiert, dass die zwischenliegend angeordnete Dämpfungseinrichtung jeweils auf eine Kontaktfläche des Achsschemels und der Tragkonsole aufvulkanisiert ist.

Aus der DE 940 17 94 U1 geht eine anbaubare Radeinrichtung hervor, die einen gabelförmigen Achsschemel zur Aufnahme eines Laufrads aufweist, wobei dieser vermittels eines als Bolzen ausgebildeten Kupplungselements mit einer Tragkonsole verbunden ist. Die Tragkonsole dient zum unmittelbaren Anschluss an einen Transportkörper, wobei zwischen der Tragkonsole und dem Achsschemel ein Axiallager und mehrere Dämpfungselemente angeordnet sein können. Die Dämpfungselements dienen insbesondere zur Dämpfung einer Lenkbewegung des Laufrads. Ein Schlingern des Laufrads soll so wirkungsvoll vermieden werden.

Die US 2647277A beschreibt ein Laufrad, welches in einem Achsschemel einer Radeinrichtung gehaltert ist. Der Achsschemel ist vermittels eines Dämpfungselements mit einer als Tragkonsole bzw. Hülse verbunden. Ein Kupplungselement in Form einer Drehachse dienenden Schraube haltert die Tragkonsole drehbar an einer Grundplatte, die mit einem Transportkörper verschraubt werden kann.

Aus der DE 202 19 351 U1 ist eine anbaubare Radeinrichtung bekannt, bei der zur Anordnung der Dämpfungseinrichtung zwischen einer als Hülse ausgebildeten Tragkonsole und einem Achsschemel die Dämpfungseinrichtung konzentrisch zum Kupplungselement angeordnet.

Eine vergleichbare Ausbildung einer Radeinrichtung ist auch der US 3,286,298 zu entnehmen, bei der zwischen einem Achsschemel und einer Tragkonsole angeordnet eine Mehrzahl von Dämpfereinrichtungen vorgesehen ist, die jeweils konzentrisch auf Verbindungsbolzen zwischen der Tragkonsole und dem Achsschemel angeordnet sind.

Ausgehend vom Stand der Technik liegt der vorliegenden Erfindung die Aufgabe zugrunde, eine Radeinrichtung mit zwischen der Tragkonsole und dem Achsschemel angeordneter Dämpfungseinrichtung vorzuschlagen, die einen vereinfachten mechanischen Anschluss der Dämpfungseinrichtung ermöglicht.

Diese Aufgabe wird durch eine Radeinrichtung mit den Merkmalen des Anspruchs 1 gelöst.

Die erfindungsgemäße Radeinrichtung weist einen gabelförmig ausgebildeten Achsschcmel zur Aufnahme einer Radachse, eines in den Achsschemel eingesetzten Laufrades sowie eine Tragkonsole, die zur Aufnahme eines Kupplungselements der Radeinrichtung zum Anschluss an den Transportkörper und zur Verbindung mit dem Achsschemel dient, auf. Zwischen der Tragkonsole und dem Achsschemel ist die erfindungsgemäße Radeinrichtung mit einer Dämpfungseinrichtung versehen.

Die Aufnahme der Radachse im gabelförmig ausgebildeten Achsschemel und die Verbindung des Achsschemels mit einer die Last in die Radeinrichtung einleitenden Tragkonsole ermöglicht eine in besonderem Maße schwerlastfähige Ausführung der Radeinrichtung. Durch die Anordnung der Dämpfungseinrichtung zwischen dem Achsschemel und der Tragkonsole wird eine möglichst direkte Dämpfung bei gleichzeitig besonders raumsparender Anordnung der Dämpfungseinrichtung ermöglicht, die im Ergebnis zu einer besonders schmalen Ausgestaltung der Radeinrichtung führt.

Bei der erfindungsgemäßen Radeinrichtung dient das Kupplungselement neben dem Anschluss an den Transportkörper auch zur Verbindung des Achsschemels mit der Tragkonsole. Aufgrund dieser Mehrfachfunktion des Kupplungselements ist es möglich, mit einer geringen Teileanzahl beim Aufbau der Radeinrichtung auszukommen, so dass eine insgesamt kompakte Ausbildung die Folge ist.

Bei der erfindungsgemäßen Radeinrichtung umfasst die Dämpfungseinrichtung zumindest zwei Dämpferanordnungen, die mit Abstand zum Kupplungselement zu beiden Seiten der Radachse angeordnet sind, so dass eine in Fahrtrichtung breite Dämpfungsbasis ermöglicht wird, die die Dämpfungswirkung beim Überfahren von Hindernissen verstärkt.

Darüber hinaus sind bei der erfindungsgemäßen Radeinrichtung die Dämpferanordnungen durch eine im Kupplungselement zwischen der Tragkonsole und dem Achsschemel wirkend Zugspannung vorgespannt.

Wenn darüber hinaus die Dämpferanordnungen jeweils zwei Dämpferelemente umfassen, die mit Abstand in einer Richtung parallel zur Radachse voneinander angeordnet sind, werden auch besonders gute Dämpfungseigenschaften bei quer zur Fahrtrichtung auf die Radeinrichtung bzw. einen mit der Radeinrichtung verbundenen Transportkörper einwirkenden Stoßbelastungen möglich.

Ein besonders einfacher und raumsparender Aufbau der Dämpferelemente wird möglich, wenn die Dämpferelemente als Dämpfungskörper, beispielsweise als Gummidämpfer, ausgebildet sind.

Eine besondere Richtungsstabilität einer lenkbar ausgebildeten Radeinrichtung wird möglich, wenn das Kupplungselement mit seitlichem Abstand zur Radachse angeordnet ist, so dass ein entsprechender Nachlauf an der Radeinrichtung realisiert ist. Eine aus dem Radlauf resultierende Asymmetrie der Anordnung der Dämpferelemente lässt sich besonders vorteilhaft durch eine entsprechende Auswahl bzw. Einstellung der spezifischen Dämpfungswerte des für die Dämpferelemente ausgewählten Materials, also beispielsweise der Shorehärte von Gummi, berücksichtigen.

Besonders vorteilhaft zur Dämpfung von Anfahr- oder Bremsstoßbclastungen ist es, wenn das Kupplungselement zur Verbindung mit dem Achsschemel einen Verbindungszapfen aufweist, der bei radial zwischenliegender Anordnung eines Dämpfungselements in einer Verbindungsöffnung des Achsschemels eingesetzt ist.

Zur axialen Vorspannung der zwischen dem Achsschemel und der Tragkonsole angeordneten Dämpferelemente kann der Verbindungszapfen des Kupplungselements über eine die Verbindungsöffnung des Achsschemels hintergreifende Scheibe mit dem Achsschemel verbunden sein.

Wenn die Scheibe zur Verbindung mit dem Verbindungszapfen einen Kalottenteil aufweist, der in eine stirnseitig am Verbindungszapfen ausgebildete Kalottenaufnahme eingreift, sind relative Kippbewegungen des Laufrads bzw. der Radachse quer zur Fahrrichtung möglich, ohne dass es zu unerwünscht bleibenden Verformungen an der Radeinrichtung kommen kann.

Besonders vorteilhaft für eine schnelle und sichere Ankupplung der Radeinrichtung an den Transportkörper oder dergleichen ist es, wenn das Kupplungselement als Einsteckzapfen ausgebildet ist.

Nachfolgend wird eine bevorzugte Ausführungsform der Radeinrichtung anhand der Zeichnung näher erläutert.

Es zeigen:
- **Fig. 1**: eine Mehrzahl von in Eckbereichen eines Transportkörpers angeordneten Radeinrichtungen;
- **Fig. 2**: eine Radeinrichtung in Seitenansicht;
- **Fig. 3**: die in **Fig. 2** dargestellte Radeinrichtung in einer Ansicht gemäß dem Pfeil III;
- **Fig. 4**: die in **Fig. 2** dargestellte Radeinrichtung in einer Ansicht gemäß dem Pfeil IV;
- **Fig**. **5**: eine Draufsicht der in **Fig**. **2** dargestellten Radeinrichtung;
- **Fig. 6**: eine Teilschnittdarstellung der in **Fig. 5** dargestellten Radeinrichtung gemäß Schnittlinienverlauf VI-VI;
- **Fig. 7**: eine vergrößerte Darstellung des in **Fig. 6** mit X gekennzeichneten Bereichs.

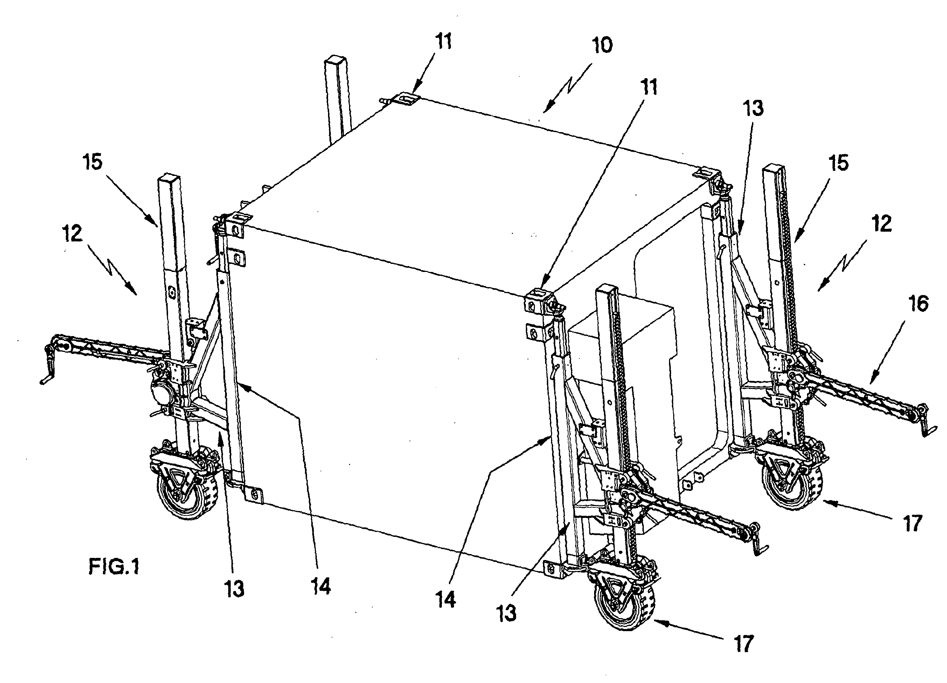

**Fig. 1** zeigt einen im vorliegenden Fall als Kabine ausgebildeten quaderförmigen Transportkörper 10, der in seinen Ecken mit Eckbefestigungen 11 versehen ist, die zum Anschluss von Container- Hub- und Transporteinrichtungen 12 dienen. Die Container- Hub- und Transportcinrichtungen 12 sind über eine Tragauslegereinrichtung 13 mit jeweils zwei Eckbefestigungen 11 an einer Hochkante 14 des Transportkörpers 10 verbunden. Die Tragauslegereinrichtungen 13 sind jeweils an eine Zahnstangenhubeinrichtung 15 angeschlossen, die über einen Kurbeltrieb 16 betätigt eine Hubbewegung des Transportkörpers 10 ermöglicht. Um ein Verfahren des Transportkörpers 10 zu ermöglichen, sind die Zahnstangenhubeinrichtungen 15 an ihrem unteren Ende mit einer anbaubaren Radeinrichtung 17 versehen.

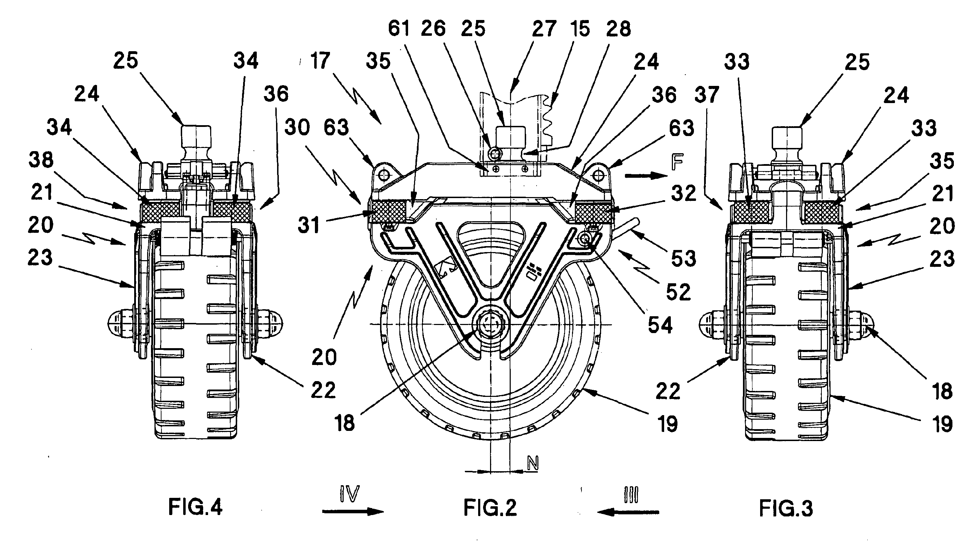

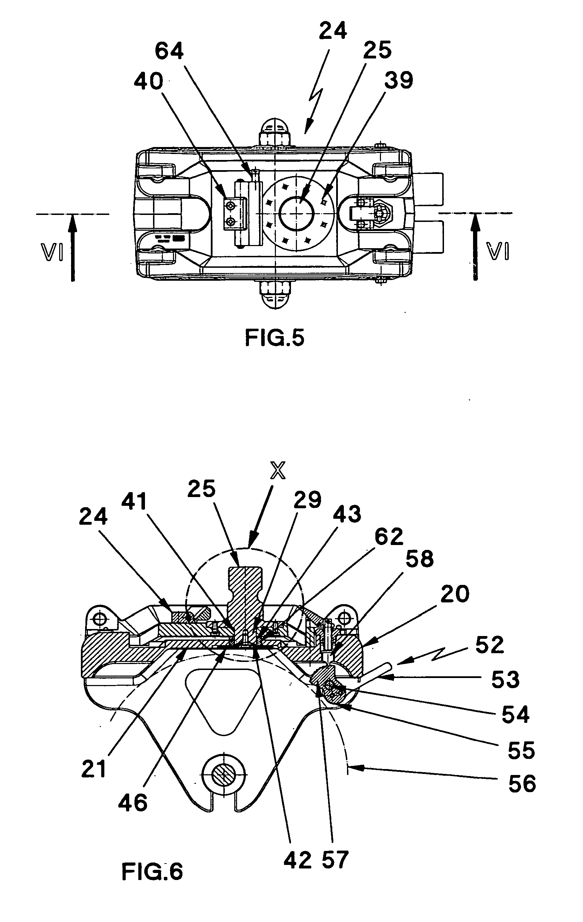

Wie sich aus einer Zusammenschau der **Figuren 2, 3** und **4**, die die Radeinrichtung 17 in einer Seitenansicht bzw. einer Vorderansicht und einer Rückansicht darstellen, ergibt, weist die Radeinrichtung 17 eine Radachse 18 auf, die zur Aufnahme eines Rades 19 in einem Achsschemel 20 angeordnet ist. Der Achsschemel 20 ist im Wesentlichen U-förmig ausgebildet mit einer Achsschemelbasis 21 und zwei seitlich daran ansetzenden Achsschemelwangen 22, 23, die jeweils dreiecksförmig ausgebildet sind. Oberhalb der Achsschemelbasis 21 befindet sich eine Tragkonsole 24, die mit einem hier nachfolgend als Königszapfen 25 bezeichneten Einsteckzapfen versehen ist, der als Kupplungselement dient. Der Königszapfen 25 ist an seinem dem Achsschemel 20 zugewandten Ende mit einem Verbindungszapfen 29 versehen (Fig. 6), der zur Verbindung der Tragkonsole 24 mit dem Achsschemel 20 dient.

Zur Verbindung mit der Zahnstangenhubeinrichtung 15 wird, wie **Fig. 2** zeigt, die Radeinrichtung 17 mit dem Königszapfen 25 in eine am unteren Endquerschnitt der Zahnstangenhubeinrichtung 15 ausgebildete Aufnahmeplatte 61 eingeführt und mit einem Steckbolzen 26 gesichert, der in der Sicherungsposition quer zu einer Königszapfenachse 27 verlaufend in eine Ringnut 28 des Königszapfens 25 eingreift.

Alternativ kann der Königszapfen 25 der Radeinrichtung 17 auch mit einem hier nicht näher dargestellten Adapter versehen werden, mittels dem die Radeinrichtung 17 direkt an den unteren Eckbefestigungen 11 des Transportkörpers 10 befestigt werden kann.

Wie ferner aus **Fig. 2** zu ersehen ist, weist die Königszapfenachse 27 zur Ausbildung eines Nachlaufs N einen entsprechenden Abstand zur Radachse 18 auf.

Zwischen der Tragkonsole 24 und dem Achsschemel 20 bzw. der Achsschemelbasis 21 ist eine Dämpfungseinrichtung 30 vorgesehen, die im vorliegenden Fall zwei Dämpferanordnungen 31, 32 aufweist, die jeweils in von der Radachse 18 beabstandeten Endbereichen der Achsschemelbasis 21 bzw. der Tragkonsole 24 angeordnet sind.

Wie aus den **Figuren 3** und **4** deutlich wird, umfasst jede Dämpferanordnung 31 bzw. 32 jeweils zwei Dämpferelemente 33 bzw. 34, die aus einem Dämpfungsgummi hergestellt sind. Die der Dämpfungseinrichtung 30 zugewandte Unterseite der Tragkonsole 24 und die der Dämpfungseinrichtung 30 zugewandte Oberseite der Achsschemelbasis 21 sind so ausgebildet, dass in der durch den Zusammenbau der Tragkonsole 24 und des Achsschemels 20 definierten Relativanordnung zwischen der Unterseite der Tragkonsole 24 und der Oberseite der Achsschemelbasis 21 vier Dämpferkammern 35, 36, 37 und 38 ausgebildet sind, die jeweils zur Aufnahme eines Dämpferelements 33 bzw. 34 dienen. In den Dämpferkammern 35, 36, 37 und 38 werden die hier zylinderförmig ausgebildeten Dämpferelemente 33 bzw. 34 durch eine in dem Verbindungszapfen 29 zwischen der Tragkonsole 24 und dem Achsschemel 20 wirkende Zugspannung vorgespannt.

Wie aus einer Zusammenschau der **Figuren 5** und **6** hervorgeht, ist der Königszapfen 25, der einerseits als Kupplungselement zur Verbindung mit der Zahnstangenhubeinrichtung 15 der Container- Hub- und Transporteinrichtung 12 und andererseits mit seinem Verbindungszapfen 29 zur Verbindung der Tragkonsole 24 mit dem Achsschemel 20 dient, über einen Befestigungsflansch 39 mit einer Oberseite 40 der Tragkonsole 24 verbunden. Der sich vom Befestigungsflansch 39 entgegengesetzt zu einem Kupplungsteil 62 des Königszapfens 25 in Richtung der Königszapfenachse 27 weg erstreckende Verbindungszapfen 29 durchgreift eine Einstecköffnung 41 der Tragkonsole 24 und greift mit seinem freien Verbindungsende 42 in ein koaxial zur Einstecköffnung 41 der Tragkonsole 24 ausgerichtete Durchgangsöffnung 43 in der Achsschemelbasis 21 ein.

Wie eine Zusammenschau der **Fig. 2** **und** **5** deutlich macht, ist die Tragkonsole 24 mit einem umschlagbaren Riegel 64 versehen, der eine Schwenkarretierung des Königszapfens 25 durch einen Anschlag gegen die Zahnstangenhubeinrichtung 15 ermöglicht, so dass die Richtung des Nachlaufs N arretiert und definiert ist.

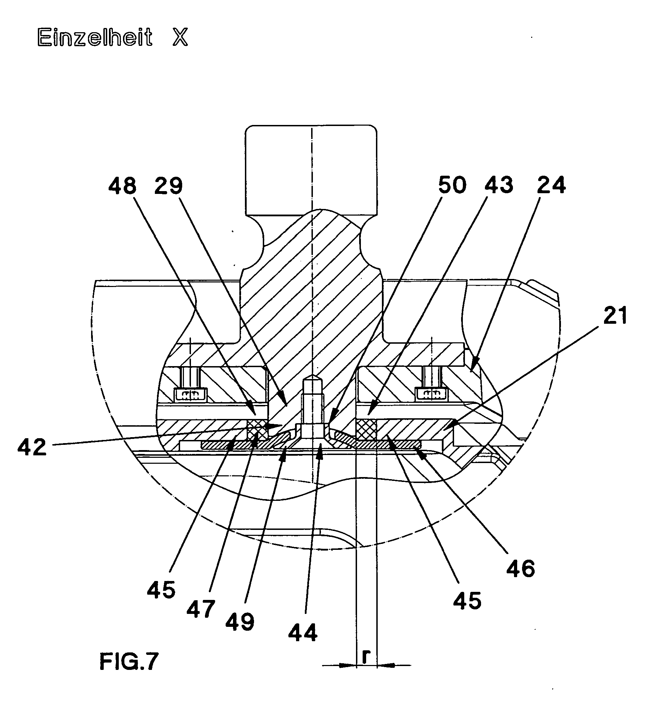

Wie insbesondere aus der vergrößerten Detaildarstellung des in **Fig. 6** mit X-gekennzeichneten Verbindungsbereichs zwischen der Tragkonsole 24 und dem Achsschemel 20 in **Fig. 7** hervorgeht, ist das Verbindungsende 42 des Verbindungszapfens 29 über eine Schraubverbindung 44 mit einer einen Öffnungsrand 45 der Durchgangsöffnung 43 hintergreifenden Scheibe 46 versehen, derart, dass bei einem Einschraubvorgang zur Herstellung der Schraubverbindung 44 auf die in den Dämpfungskammern 35 bis 38 (**Fig. 2, 3 und 4**) zwischen der Unterseite der Tragkonsole 24 und der Oberseite der Achsschemelbasis 21 angeordneten Dämpferelemente 33 und 34 eine Druckkraft ausgeübt wird, die die vorstehend erwähnte Vorspannung der Dämpferelemente 33, 34 zur Folge hat.

Wie ferner aus **Fig. 7** zu ersehen ist, ist die Durchgangsöffnung 43 in der Achsschemelbasis 21 gegenüber dem Durchmesser des Verbindungszapfens 29 mit einem erheblichen Übermaß r versehen, so dass ein Ringspalt 48 zwischen dem Verbindungszapfen 29 und dem Öffnungsrand 45 der Durchgangsöffnung 43 ausgebildet ist, in den im vorliegenden Fall ein elastischer Dämpfungsring 47 eingelegt ist. Wie aus einer Zusammenschau der **Figuren 2****,** **6** und **7** deutlich wird, bewirkt eine durch eine hier nicht näher dargestellte, beispielsweise an Zugösen 63 der Tragkonsole 24 angelenkte Deichseleinrichtung bei einem Anfahr- oder Abbremsvorgang eine zwischen der Königszapfenachse 27 und der Radachse 18 wirkende Zug- oder Druckkraft F, die zu einer entsprechenden Relativbewegung des Verbindungszapfens 29 quer zur Königszapfenachse 27 in der Durchgangsöffnung 43 führt. Aufgrund des radialen Übermaßes r ist es somit möglich, dass nicht nur schwerkraftbedingte Stöße durch die Dämpferelemente 33 bzw. 34 aufgenommen werden können, sondern darüber hinaus auch Anfahr- und Bremsstöße.

Wie ferner aus **Fig. 7** zu ersehen ist, ist die Scheibe 46 in ihrem Verbindungsbereich zum Verbindungszapfen 29 mit einem Kalottenteil 49 versehen, der in einen als Kalottenaufnahme 50 ausgebildeten stirnseitigen Endquerschnitt des Verbindungszapfen 29 eingreift. Hierdurch ist es möglich, dass in Folge von extremen Stoß- oder Bremsbelastungen, die auf die Schraubenverbindung 44 wirken, Relativverschiebungen zwischen dem Verbindungszapfen 29 und der Scheibe 46 in einer Kalottenebene ermöglicht werden, so dass unerwünschte bleibende Verformungen verhindert werden können.

Wie aus einer Zusammenschau der **Figuren 2** und **6** ersichtlich, ist die Radeinrichtung 17 mit einer Exzenterbremse 52 versehen, die bei Umlegen eines Bremshebels 53 um eine Exzenterachse 54 ein Klemmen eines Exzenters 55 gegen einen Radumfang 56 bewirkt. Dabei erfolgt eine Sicherung der Exzenterklemmung über einen Rastnocken 57, der mit einem im Achsschemel 20 aufgenommenen Rastzapfen 58 zusammenwirkt.

Zur Verbindung der bereits vorstehend erwähnten, hier nicht näher dargestellten Deichseleinrichtung mit einer Radeinrichtung 17 bzw. zwei auf einer Seite des Transportkörpers 10 angeordneten Radeinrichtungen 17 ist die Tragkonsole 24 mit einer Mehrzahl von Zugösen 63 versehen, die unabhängig von der jeweiligen Positionierung der Radeinrichtung 17 eine Verbindung mit der Deichseleinrichtung ermöglichen. Alternativ ist es auch möglich, eine entsprechend ausgebildete Deichseleinrichtung unmittelbar mit Achsmuttern 59 der Radachse 18 zu verbinden.

## Patentansprüche

1. Anbaubare Radeinrichtung (17) zum Anschluss an einen Transportkörper (10), insbesondere für eine Container-, Hub- und Transporteinrichtung, mit einem gabelförmig ausgebildeten Achsschemel (20) zur Aufnahme einer Radachse (18) eines in den Achsschemel (20) eingesetzten Laufrads (19) und mit einer Tragkonsole (24), die zur Aufnahme eines Kupplungselements (25) der Radeinrichtung zum Anschluss an den Transportkörper und zur Verbindung mit dem Achsschemel dient, sowie einer zwischen der Tragkonsole und dem Achsschemel wirksamen Dämpfungseinrichtung (30),
**dadurch gekennzeichnet,**
**dass** das Kupplungselement (25) zur Verbindung des Achsschemels (20) mit der Tragkonsole (24) dient, und dass die Dämpfungseinrichtung (30) zumindest zwei Dämpferanordnungen (31, 32) umfasst, die mit Abstand zum Kupplungselement (25) zu beiden Seiten der Radachse (18) angeordnet und durch eine im Kupplungselement (25) zwischen der Tragkonsole (24) und dem Achsschemel (20) wirkende Zugspannung vorgespannt sind.

2. Radeinrichtung nach Anspruch 1,
**dadurch gekennzeichnet,**
**dass** die Dämpferanordnungen (31, 32) jeweils zwei Dämpferelemento (33, 34) umfassen, die mit Abstand in einer Richtung parallel zur Radachse (18) voneinander angeordnet sind.

3. Radeinrichtung nach Anspruch 2,
**dadurch gekennzeichnet,**
**dass** die Dämpferelemente (33, 34) als Dämpfungskörper ausgebildet sind.

4. Radeinrichtung nach einem der vorangehenden Ansprüche,
**dadurch gekennzeichnet,**
**dass** das Kupplungselement (25) mit seitlichem Abstand zur Radachse (18) angeordnet ist.

5. Radeinrichtung nach einem der vorangehenden Ansprüche,
**dadurch gekennzeichnet,**
**dass** das Kupplungselement (25) zur Verbindung mit dem Achsschemel (20) einen Verbindungszapfen (29) aufweist, der bei radial zwischenliegender Anordnung eines Dämpfungselements (33, 34) in eine Verbindungsöffnung (43) des Achsschemels eingesetzt ist.

6. Radeinrichtung nach Anspruch 5,
**dadurch gekennzeichnet,**
**dass** zur axialen Vorspannung der zwischen dem Achsschemel (20) und der Tragkonsole (24) angeordneten Dämpferelemente (33, 34) der Verbindungszapfen (29) des Kupplungselements (25) über eine die Verbindungsöffnung (43) des Achsschemels hintergreifende Scheibe (46) mit dem Achsschemel verbunden ist.

7. Radeinrichtung nach Anspruch 6,
**dadurch gekennzeichnet,**
**dass** die Scheibe (46) zur Verbindung mit dem Verbindungszapfen (29) einen Kalottenteil (49) aufweist, der in eine stirnseitig am Verbindungszapfen (29) ausgebildete Kalottenaufnahme (50) eingreift.

8. Radeinrichtung nach einem der vorangehenden Ansprüche,
**dadurch gekennzeichnet,**
**dass** das Kupplungselement (25) als Einsteckzapfen ausgebildet ist.

## Claims

1. A mountable wheel assembly (17) for attachment to a transporting body (10), in particular for a container, lifting gear and transport assembly, comprising a fork-shaped axle bolster (20) for accommodating the axle (18) of a running wheel (19) fitted in the axle bolster (20), also comprising a support bracket (24) that serves for accommodating a coupling element (25) of the wheel assembly for attachment to the transporting body and for connection to the axle bolster, as well as a damping device (30) acting between the support bracket and the axle bolster,
**characterized in that**
the coupling element (25) serves for connecting the axle bolster (20) to the support bracket (24), and that the damping device (30) comprises a minimum of two shock absorbers (31, 32), which are arranged on both sides of the wheel axle (18) spaced apart from the coupling element (25) and which are pre-stressed by tensile stress acting in the coupling element (25) between the support bracket (24) and the axle bolster (20).

2. A wheel assembly according to claim 1,
**characterized in that**
the shock absorbers (31, 32) each comprise two damping elements (33, 34) which are arranged spaced apart from each other in one direction parallel to the wheel axle (18).

3. A wheel assembly according to claim 2,
**characterized in that**
the damping elements (33, 34) are designed as damping bodies.

4. A wheel assembly according to one of the preceding claims,
**characterized in that**
the coupling element (25) is arranged at a lateral distance to the wheel axle (18).

5. A wheel assembly according to one of the preceding claims,
**characterized in that**
the coupling element (25) for the connection to the axle bolster (20) features an assembly pin (29) which, with a radially interspersed damping element (33, 34), is inserted in a link opening (43) of the axle bolster.

6. A wheel assembly according to claim 5,
**characterized in that**
for the purpose of axial pre-stressing of the damping elements (33, 34) arranged between the axle bolster (20) and the support bracket (24), the assembly pin (29) of the coupling element (25) is connected to the axle bolster by a disk (46) engaging from behind in the link opening (43) of the axle bolster.

7. A wheel assembly according to claim 6,
**characterized in that**
the disk (46) for connection to the assembly pin (29) features a calotte part (49) that engages in a calotte reception (50) formed on the front face of the assembly pin (29).

8. A wheel assembly according to one of the preceding claims,
**characterized in that**
the coupling element (25) is designed as an plug-in pin.

## Revendications

1. Dispositif de roues (17) à monter, destiné à être raccordé sur un organe de transport (10), notamment pour un dispositif de conteneurs, de levage ou de transport, avec une sellette d'essieu (20) conçue en forme de fourche pour réceptionner un essieu de roue (18) d'une roue de roulement (19) placée dans la sellette d'essieu (20) et avec une console porteuse (24) servant au logement d'un élément de couplage (25) du dispositif de roue pour le raccordement sur l'organe de transport et pour la liaison avec la sellette d'essieu, ainsi que d'un dispositif d'amortissement (30) actif entre la console porteuse et la sellette d'essieu,
**caractérisé en ce que**
l'élément de couplage (25) sert à la liaison de la sellette d'essieu (20) avec la console porteuse (24) et **en ce que** le dispositif d'amortissement (30) comprend au moins deux agencements amortisseurs (31, 32) qui sont disposés avec un écart par rapport à l'élément de couplage (25) sur les deux côtés de l'essieu de roue (18) et qui sont précontraints par un effort de traction agissant dans l'élément de couplage (25) entre la console porteuse (24) et la sellette d'essieu (20).

2. Dispositif de roues selon la revendication 1,
**caractérisé en ce que**
les agencements amortisseurs (31, 32) comprennent deux éléments amortisseurs (33, 34) chacun, qui sont disposés avec un écart l'un par rapport à l'autre dans une direction à la parallèle de l'essieu de roue (18).

3. Dispositif de roues selon la revendication 2,
**caractérisé en ce que**
les éléments amortisseurs (33, 34) sont conçus sous la forme de corps amortisseurs.

4. Dispositif de roues selon l'une quelconque des revendications précédentes,
**caractérisé en ce que**
l'élément de couplage (25) est disposé avec un écart latéral par rapport à l'essieu de roue (18).

5. Dispositif de roues selon l'une quelconque des revendications précédentes,
**caractérisé en ce que**
l'élément de couplage (25) comporte pour la liaison avec la sellette d'essieu (20) un tenon de liaison (29) qui, lorsqu'on dispose un élément amortisseur (33, 34) radialement intercalé, est inséré dans un orifice de liaison (43) de la sellette d'essieu.

6. Dispositif de roues selon la revendication 5,
**caractérisé en ce que**
pour la précontrainte axiale des éléments amortisseurs (33, 34) disposés entre la sellette d'essieu (20) et la console porteuse (24), le tenon de liaison (29) de l'élément de couplage (25) est relié avec la sellette d'essieu par l'intermédiaire d'un disque (46) accrochant par l'arrière l'orifice de liaison (43) de la sellette d'essieu.

7. Dispositif de roues selon la revendication 6,
**caractérisé en ce que**
pour la liaison avec le tenon de liaison (29), le disque (46) comporte un élément en calotte (49) qui s'engage dans un logement de calotte (50) conçu en face frontale sur le tenon de liaison (29).

8. Dispositif de roues selon l'une quelconque des revendications précédentes,
**caractérisé en ce que**
l'élément de liaison (25) est conçu sous la forme d'un tenon enfichable.
